# EUROPEAN PATENT SPECIFICATION

(11) **EP 3 070 227 B1**
(45) Date of publication and mention of the grant of the patent: **28.02.2018**
(21) Application number: 14902530.6
(22) Date of filing: 02.12.2014
(51) Int. Cl.: E04F 13/075, E04F 13/08, E04F 13/15, C03C 11/00, E04B 1/66, E04B 1/90, E04B 1/94, E04F 13/14

(54) **FOAM GLASS INTEGRATED PLATE EFFECTIVE IN WATER AND FIRE PROOFING, THERMAL INSULATION AND DECORATION**
SCHAUMSTOFFGLASINTEGRIERTE PLATTE FÜR WASSER- UND FEUERFESTMACHUNG, WÄRMEDÄMMUNG UND DEKORATION
PLAQUE INTÉGRÉE DE VERRE CELLULAIRE EFFICACE EN TERMES D'HYDROFUGATION ET D'IGNIFUGATION, D'ISOLATION THERMIQUE ET DE DÉCORATION

(30) Priority: 26.09.2014 CN 201410500238
(43) Date of publication of application: 21.09.2016
(73) Proprietor: Zhejiang Zhenshen Insulation Technology Corporation Limited, Jiaxing, Zhejiang 341300 (CN)
(72) Inventor: ZHANG, Yongfu, Jiaxing Zhejiang 341300 (CN); ZHANG, Chunhua, Jiaxing Zhejiang 341300 (CN); HUANG, Xiaobin, Zhejiang Zhejiang 310009 (CN)
(74) Representative: Sun, Yiming
(86) International application number: PCT/CN2014/092848
(87) International publication number: WO 2016/045194

(56) References cited:
- EP-A1- 2 562 325
- WO-A1-88/03204
- CN-A- 101 319 551
- CN-A- 102 912 954
- CN-A- 103 938 822
- CN-U- 202 672 550
- CN-U- 202 706 240
- FR-A1- 2 520 030
- US-A- 4 990 398

## Description

### Technical Field of the Invention

The present invention relates to a foam glass integrated plate assembly as defined in claim 1.

### Background of the Invention

A traditional foam glass integrated plate is made of three parts, namely a bonding layer, a piece of foam glass and a decorative layer. The foam glass surface is a common plane structure so that the decorative layer secured on the surface must be required to achieve a decorative effect. When securing the decorative layer, an intermediate medium (mesh fabric, for example) is required, thus resulting in complex process and high cost. In order to secure the foam glass onto a wall, a thin dusting mechanism is employed in most cases. The bonding layer used in such cases is cement-based and suitable to rough concrete wall surfaces, but it has poor bonding effect for glass, steel or other dense and smooth wall surfaces so that a foam glass plate is very likely to fall off such wall surfaces. Furthermore, the construction process is very complex, where riveting is required in addition to wall surface dedusting, surface mortar applying, bonding mortar applying and mesh fabric bonding, and as a result, the process is complex and the cost is high. The existing thermal insulating materials for buildings must have a same service life as the buildings, and since the buildings may have cracks due to various causes during its service span, the thermal insulating materials with inorganic adhesive used in the existing thin dusting mechanism will peel off or crack together with the buildings, thereby resulting in leakage.

WO 88/03204 A1 describes construction of building walls using prefabricated panels covered with a plurality of fascia panels or tiles resiliently mounted to the panel supporting structure.

CN 101 319 551 A describes a construction method which is suitable for various industrial and civil building walling having the requirement of energy conservation in a large part of China under different climate conditions. The construction method comprises the following steps that: a bonding agent is used for bonding an insulation board on the walling; mortar is coated on the insulation board and a piece of medium-alkali mesh cloth is wrapped in the mortar; and coating is plastered on the mortar, and the insulation board is a foam glass insulation board.

### Summary of the Invention

In order to solve the deficiencies of complex process and high cost of the foam glass integrated plate as described above, the present invention provides a foam glass integrated plate assembly which has the advantages of simple structure, low cost, good decorative effect and wide application range.

To achieve this purpose, the present invention proposes the following technical solution as set out in claim 1: A foam glass integrated plate assembly effective in water and fire proofing, thermal insulation and decoration is provided, comprising a foam glass plate, wherein a bonding layer is combined on an inside surface of the foam glass plate and a coating layer is combined on an outside surface thereof, and the foam glass plate is fixed onto a wall surface by the bonding layer; wherein the bonding layer is made of a rapid-curing organic adhesive and an anchor bolt securing member, wherein:
an outer surface of the foam glass is a stereoscopic embossed surface after cutting, and an inner surface of the foam glass is a stereoscopic face matched with the wall surface in shape;
the rapid-curing organic adhesive is applied between the foam glass plate and the anchor bolt securing member;
one or more grooves for placing the anchor bolt securing member are provided on four side surfaces of the foam glass plate, and a rigid support member is pasted inside each of the grooves, and the anchor bolt securing member is a metal member or a rigid plastic member;
the main raw materials of the foam glass plate are industrial waste residues or construction wastes;
the coating layer is formed by directly applying a coating on the outer surface of the foam glass, the thickness of the foam glass plate is 20 mm to 800 mm, and the area of the foam glass is 0.01 m² to 10 m²;
the rapid-curing organic adhesive may be applied in a joint or seam line between the adjacent foam glass plates; and
the rapid-curing organic adhesive is a weather-resistant silicone adhesive or resin adhesive.

The present invention has the following advantages. First, it is environmentally friendly and high in economic benefit since the main raw materials of the foam glass plate are industrial waste residues or construction wastes; it is easy to cut and carve the foam glass plate into various patterns and shapes; and the coating is directly applied onto the stereoscopic embossed face, thereby realizing simple process, low cost, and good decorative effect. Second, the mounting is so easy that the foam glass plate can be directly bonded onto the wall surface just by subjecting the wall surface to simple dedusting, with a rapid-hardening organic adhesive being used as the bonding layer: the foam glass plate can be directly bonded onto the wall surface just by subjecting the wall surface to simple dedusting and point-coating or applying surface mortar; and the joints may be reinforced by rivets which are forced into the grooves on the side faces of the foam glass and the adhesive is applied in the grooves, thereby realizing simple process, convenient construction, low labor intensity, high efficiency, high adaptability to wall surfaces of different materials and densities, high bonding strength, and strong weather resistance. Third, such a foam glass integrated plate is simple in structure, light in weight and high in strength, and is thus suitable for thermal insulating and fire proofing decoration internal and external to building walls, as well as for thermal insulating and fire proofing decoration of building roofs and for thermal insulating and fire proofing decoration of indoor ceilings, with good thermal insulating and fire proofing effects and stable performance. Fourth, the weather-resistant organic adhesive, as used in the present invention, may effectively resist against tensile stress generated by the occurrence of some small cracks in the buildings. Fifth, the foam glass integrated plate of the present invention may be used for replacing GRC (Glass Reinforced Concrete) products used in buildings, and it is very appropriate to use the foam glass as the decorating and shaping material of buildings due to its high strength, light weight, high plasticity, good stability and convenient construction and the like. Sixth, the foam glass integrated plate may be used, as the indoor fire and water proof, thermal insulating, sound insulating and decorative material, in indoor walls and ceilings.

### Brief Description of the Drawings

Fig. 1 is a cross-sectional structure view of Embodiment 1 of the present invention;
Fig. 2 is a cross-sectional structure view of Embodiment 2 of the present invention;
Fig. 3 is a cross-sectional structure view of Embodiment 3 of the present invention;
Fig. 4 is an enlarged view of portion A of Fig. 1; and
Fig. 5 is an enlarged view of portion B of Fig. 2.

### Detailed Description of the Invention

### Embodiment 1

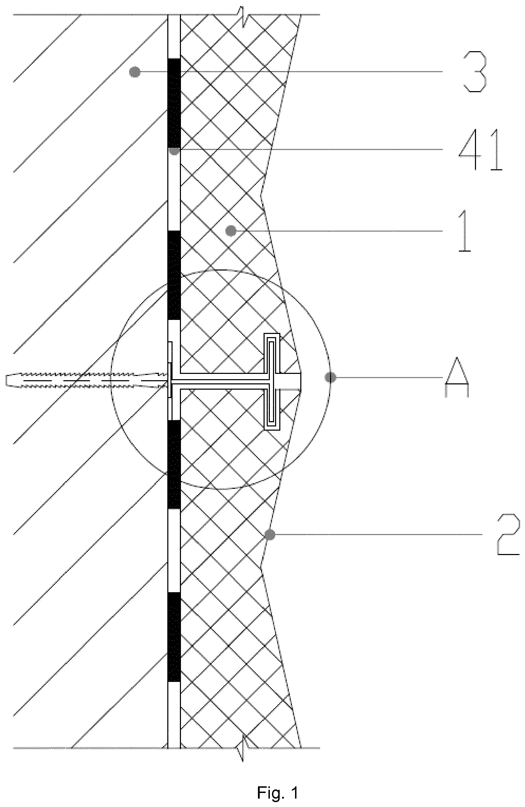

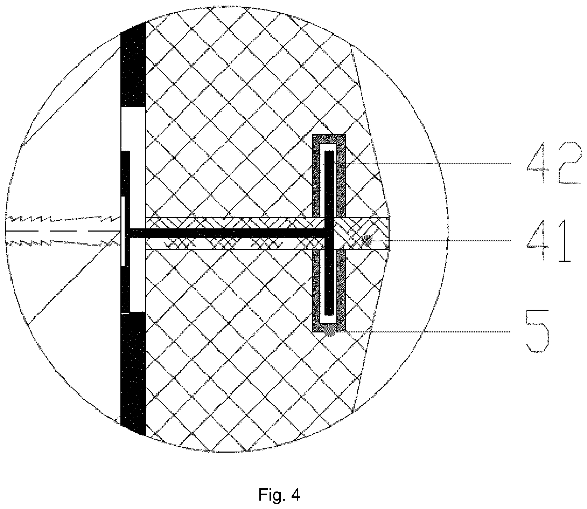

Referring to Fig. 1 and Fig. 4, a foam glass integrated plate effective in water and fire proofing, thermal insulation and decoration comprises a foam glass plate 1, wherein a bonding layer is combined on an inside surface of the foam glass plate and a coating layer 2 is combined on an outside surface of the foam glass plate, and the foam glass plate is fixed onto a wall surface 3 by the bonding layer; and an outer surface of the foam glass is a stereoscopic embossed surface after cutting. The coating layer is formed by directly applying a coating on the outer surface of the foam glass, the thickness of the foam glass plate is 20 mm, and the area of the foam glass is 0.01 m². The bonding layer is made of a rapid-curing organic adhesive 41 and an anchor bolt securing member 42. The anchor bolt securing member is a metal member. One or more grooves for placing the anchor bolt securing member are provided on four side surfaces of the foam glass plate, and a rigid support member 5 is pasted inside each of the grooves. The anchor bolt securing member comes into point contact with the rigid support member. The rapid-curing organic adhesive is applied between the foam glass plate and the anchor bolt securing member, and the rapid-curing organic adhesive is applied in a joint or seam line between the adjacent foam glass plates. The rapid-curing organic adhesive is a weather-resistant silicone adhesive. An inner surface of the foam glass is a stereoscopic surface matched with the wall surface in shape.

### Embodiment 2

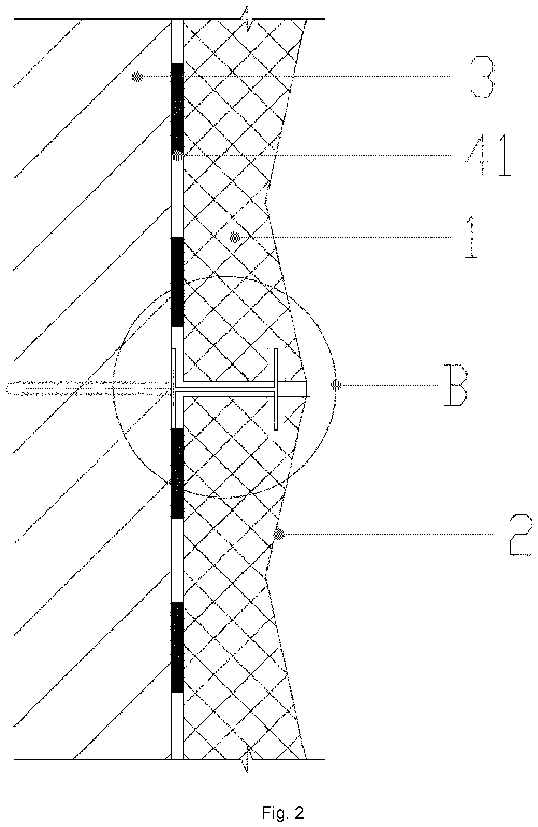

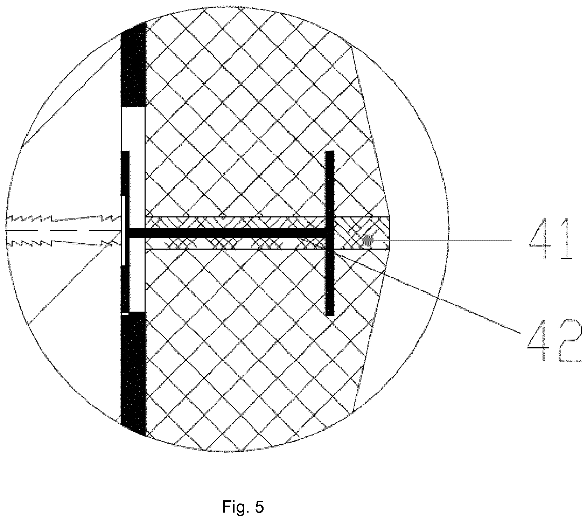

Referring to Fig. 2 and Fig. 5, a foam glass integrated plate effective in water and fire proofing, thermal insulation and decoration comprises a foam glass plate 1, wherein a bonding layer is combined on the inside surface of the foam glass plate and a coating layer 2 is combined on the outside surface of the foam glass plate, and the foam glass plate is fixed onto a wall surface 3 by the bonding layer; and an outer surface of the foam glass is a stereoscopic embossed surface after cutting. The coating layer is formed by directly applying a coating on the outer surface of the foam glass, the thickness of the foam glass plate is 800 mm, and the area of the foam glass is 10 m². The bonding layer is made of a rapid-curing organic adhesive 41 and an anchor bolt securing member 42. The anchor bolt securing member is a rigid plastic member. One or more grooves for placing the anchor bolt securing member are provided on four side surfaces of the foam glass plate, the anchor bolt securing member comes into plane contact with the grooves. The rapid-curing organic adhesive is applied between the foam glass plate and the anchor bolt securing member, and the rapid-curing organic adhesive is applied in a joint or seam line between the adjacent foam glass plates. The rapid-curing organic adhesive is a resin adhesive. An inner surface of the foam glass is a stereoscopic face matched with the wall surface in shape.

### Embodiment 3 (reference example)

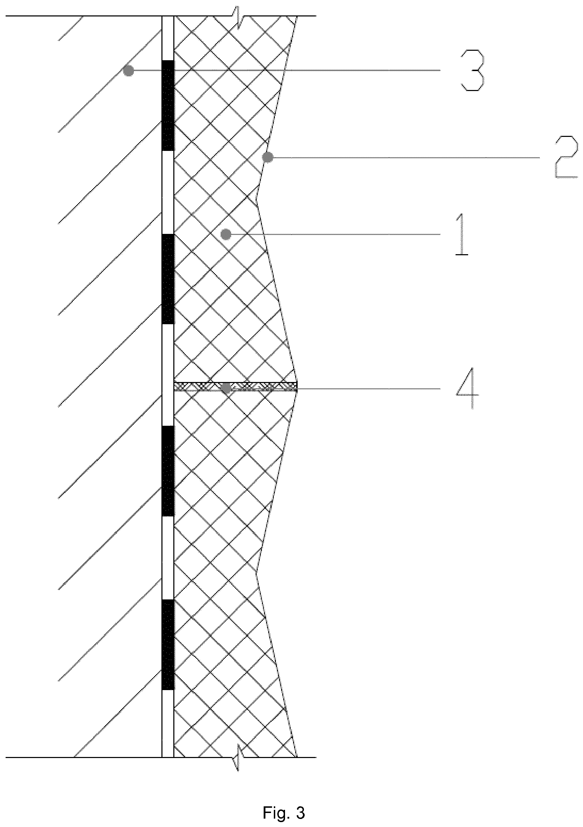

Referring to Fig. 3, a foam glass integrated plate effective in water and fire proofing, thermal insulation and decoration comprises a foam glass plate 1, wherein a bonding layer is combined on the inside surface of the foam glass plate and a coating layer 2 is combined on the outside surface of the foam glass plate, and the foam glass plate is fixed onto a wall surface 3 by the bonding layer; and an outer surface of the foam glass is a stereoscopic embossed surface after cutting. The coating layer is formed by directly applying a coating on the outer surface of the foam glass, the thickness of the foam glass plate is 400 mm, and the area of the foam glass is 5 m². The bonding layer 4 is a rapid-curing organic adhesive. The rapid-curing organic adhesive is applied in a joint between the adjacent foam glass plates. The rapid-curing organic adhesive is a weather-resistant silicone adhesive. An inner surface of the foam glass is a stereoscopic surface matched with the wall surface in shape.

## Claims

1. A foam glass integrated plate assembly effective in water and fire proofing, thermal insulation
and decoration, comprising a foam glass plate (1), wherein a bonding layer is combined on an inside surface of the foam glass plate and a coating layer (2) is combined on an outside surface of the foam glass plate (1), and the foam glass plate (1) is fixed onto a wall surface (3) by the bonding layer (4); and wherein the bonding layer (4) is made of a rapid-curing organic adhesive (41) and an anchor bolt securing member (42),
**characterized in that**
an outer surface of the foam glass plate (1) is a stereoscopic embossed surface after cutting, and an inner surface of the foam glass plate (1) is a stereoscopic face matched with the wall surface (3) in shape;
the rapid-curing organic adhesive (41) being applied between the foam glass plate (1) and the anchor bolt securing member (42);
one or more grooves for placing the anchor bolt securing member (42) are provided on four side surfaces of the foam glass plate (1), a rigid support member (5) with which the anchor bolt securing member (42) comes into point contact is pasted inside each of the grooves, and the anchor bolt securing member (42) is a metal member or rigid plastic member;
main raw materials of the foam glass plate (1) are industrial waste residues or construction wastes;
the coating layer (2) is formed by directly applying a coating on the outer surface of the foam glass plate (1), the thickness of the foam glass plate is 20 mm to 800 mm, and the area of the foam glass is 0.01 m2 to 10 m2;
the rapid-curing organic adhesive (41) is applied in a joint or seam line between adjacent foam glass plates (1); and
the rapid-curing organic adhesive (41) is a weather-resistant silicone adhesive or resin adhesive.

## Patentansprüche

1. In Schaumglas integrierte Plattenanordnung, die bei Wasser- und Feuerfestmachen, der Wärmeisolierung und in Dekorationen wirksam ist, umfassend eine Schaumglasplatte (1), wobei eine Bondierschicht auf einer Innenseitenfläche der Schaumglasplatte kombiniert ist und eine Beschichtungsschicht (2) auf einer Außenseitenfläche der Schaumglasplatte (1) kombiniert ist und die Schaumglasplatte (1) an einer Wandfläche (3) durch die Bondierschicht (4) fixiert ist; und wobei die Bondierschicht (4) aus einem schnellaushärtenden organischen Klebstoff (41) und einem Ankerbolzen sichernden Element (42) hergestellt ist,
**dadurch gekennzeichnet, dass**
eine Außenfläche der Schaumglasplatte (1) nach Schneiden eine stereoskop geprägte Oberfläche ist und eine Innenfläche der Schaumglasplatte (1) eine stereoskope Fläche ist, die auf die Wandfläche (3) gestaltsmäßig passt;
wobei der schnellaushärtende organische Klebstoff (41) zwischen die Schaumglasplatte (1) und das Ankerbolzen sichernde Element (42) eingebracht ist;
eine oder mehrere Rillen zum Positionieren des Ankerbolzens sichernden Elements (42) auf vier Seitenflächen der Schaumglasplatte (1) bereitgestellt ist/sind, ein steifes Stützelement (5), mit dem das Ankerbolzen sichernde Element (42) in Punktkontakt kommt, innerhalb jeder der Rillen geklebt ist und das Ankerbolzen sichernde Element (42) ein Metallelement oder ein steifes Kunststoffelement ist;
die Hauptrohmaterialien der Schaumglasplatte (1) industrielle Abfallrückstände oder Bauschutt sind;
die Beschichtungsschicht (2) durch direktes Aufbringen einer Beschichtung auf die Außenfläche der Schaumglasplatte (1) gebildet wird, die Dicke der Schaumglasplatte 20 bis 800 mm beträgt und der Bereich der Schaumglasplatte 0,01 m² bis 10 m² beträgt;
der schnellaushärtende organische Klebstoff (41) in eine Fuge oder Nahtlinie zwischen nebeneinanderliegenden Schaumglasplatten (1) aufgebracht wird; und
der schnellaushärtende organische Klebstoff (41) ein wetterbeständiger Siliconklebstoff oder ein Harzklebstoff ist.

## Revendications

1. Ensemble de plaque intégrée de verre cellulaire efficace en termes d'hydrofugation et d'ignifugation, comprenant une plaque de verre cellulaire (1), dans lequel une couche de liaison est combinée sur une surface intérieure de la plaque de verre cellulaire et une couche de revêtement (2) est combinée sur une surface extérieure de la plaque de verre cellulaire (1), et la plaque de verre cellulaire (1) est fixée sur une surface de paroi (3) par la couche de liaison (4) ; et dans lequel la couche de liaison (4) est fabriquée à partir d'un adhésif organique à durcissement rapide (41) et d'un élément sécurisant un boulon d'ancrage (42),
**caractérisé en ce que**
une surface extérieure de la plaque de verre cellulaire (1) est une surface en relief stéréoscopique après découpe, et une surface interne de la plaque de verre cellulaire (1) est une face stéréoscopique appariée avec la surface de paroi (3) en terme de forme ;
l'adhésif organique à durcissement rapide (41) étant appliqué entre la plaque de verre cellulaire (1) et l'élément sécurisant un boulon d'ancrage (42) ;
une ou plusieurs rainures destinées à placer l'élément sécurisant un boulon d'ancrage (42) sont fournies sur quatre surfaces latérales de la plaque de verre cellulaire (1), un élément de support rigide (5) avec lequel l'élément sécurisant un boulon d'ancrage (42) vient dans le point de contact est collé à l'intérieur de chacune des rainures, élément sécurisant un boulon ancrage (42) est un élément métallique ou un élément plastique rigide ;
les principales matières premières de la plaque de verre cellulaire (1) sont des résidus de déchets industriels ou des débris de construction ;
la couche de revêtement (2) est formée en appliquant de manière directe un revêtement sur la surface externe de la plaque de verre cellulaire (1), l'épaisseur de la plaque de verre cellulaire est comprise entre 20 mm et 800 mm, et la surface du verre cellulaire est comprise entre 0,01 m² et 10 m² ;
l'adhésif organique à durcissement rapide (41) est appliqué selon une ligne d'articulation ou une ligne de couture entre des plaques de verre cellulaire (1) adjacentes ; et
l'adhésif organique à durcissement rapide (41) est un adhésif de silicone résistant aux intempéries ou un adhésif de résine.
